# FASCICULE DE BREVET EUROPEEN

(11) **EP 2 674 302 B1**
(45) Date de publication et mention de la délivrance du brevet: **16.09.2015**
(21) Numéro de dépôt: 13164779.4
(22) Date de dépôt: 22.04.2013
(51) Int. Cl.: B44C 5/00, B44F 1/00, B41M 5/26, C03C 3/095, C03C 23/00

(54) **Procédé pour réaliser un motif coloré dans la masse d'un objet en verre transparent**
Verfahren zum erzeugen eines farbigen Musters in der Masse eines durchsichtigen Glasobjekts
Method of producing a coloured motif in the body of a transparent glass object

(30) Priorité: 23.04.2012 FR 1253704
(43) Date de publication de la demande: 18.12.2013
(73) Titulaire: SGD S.A., 92800 Puteaux (FR)
(72) Inventeur: Riezman, Yannick, Samuel, 76270 NEUFCHATEL-EN-BRAY (FR); Bourjot, Joël, 80132 YONVAL (FR)
(74) Mandataire: Martin, Didier Roland Valéry

(56) Documents cités:
- DE-A1-102004 026 257
- DE-A1-102008 007 871
- JP-A- 2004 339 001
- US-A- 4 057 408
- US-A- 5 206 496
- US-A1- 2003 015 509

## Description

La présente invention se rapporte au domaine technique et général de la décoration ou du marquage par coloration d'un substrat en verre, et en particulier de la décoration ou du marquage des flacons en verre dans la masse du verre.

La présente invention concerne un procédé de décoration industriel selon lequel on réalise un motif coloré dans la masse d'un objet en verre transparent dont la composition comprend au moins un oxyde métallique d'argent, d'or ou de cuivre, ledit procédé comportant les étapes successives suivantes:
- une étape d'irradiation laser de la zone à colorer dudit objet en verre,
- une étape finale de recuit du verre irradié.

Il est connu d'appliquer un décor sur un récipient de type flacon en verre. En général, le décor est apposé sur une partie de la paroi du flacon, par exemple par collage, sérigraphie ou gravure dans un but esthétique et/ou informatif. Il est en outre possible que la décoration fasse partie intégrante de l'objet en verre, c'est-à-dire qu'elle soit prise en masse dans le verre et ne soit pas simplement apposée en surface comme pour certaines techniques connues.

La technique d'irradiation laser du verre permet de réaliser une décoration dans la masse du verre sous certaines conditions. Cette technique peut en effet permettre de colorer une portion précise du verre en irradiant avec un faisceau laser une partie de l'objet en verre. Le verre est alors le siège de réactions électrochimiques qui peuvent conduire à la formation de centres métalliques colorés.

Il est connu que la présence de certains métaux dans la composition du verre est indispensable pour colorer le verre, notamment la présence d'un oxyde métallique comprenant soit de l'argent, de l'or ou du cuivre. Ces métaux absorbent en effet certaines radiations émises par le laser pour former, après une étape finale de recuit, des particules métalliques colorées grâce à la présence d'agents réducteurs dans le verre.

En effet, pour que la couleur apparaisse, une étape finale de recuit est nécessaire durant laquelle la présence de thermoréducteurs, tels que l'antimoine ou l'étain, permet la coloration du verre par une précipitation des particules métalliques. Sans la présence de ces éléments, il semble impossible de colorer le verre. Ainsi, la simple augmentation de la durée d'irradiation sans présence de composés thermoréducteurs dans le verre ne permet pas d'obtenir une coloration et a uniquement pour conséquence de fragiliser le verre par la création de microfractures.

Les composés thermoréducteurs réduisent également les particules métalliques non irradiées présentes dans la masse totale du verre durant cette étape de recuit. La réaction de réduction est toutefois moins importante car les particules métalliques non irradiées sont plus difficilement réduites. Néanmoins il en résulte que les zones non irradiées du verre sont toutes légèrement, voire très faiblement, colorées. De tels verres ne peuvent dès lors plus être considérés comme suffisamment transparents pour certaines applications industrielles, tel que par exemple le flaconnage pour la parfumerie ou la cosmétique.

La coloration en masse d'un verre particulièrement transparent, c'est-à-dire un verre pour lequel l'absorbance est très faible, est donc complexe à mettre en oeuvre à partir de l'état de la technique.

La transparence d'un verre peut être améliorée en ajoutant dans sa composition de l'oxyde de cérium. Mais il est connu que le cérium absorbe une partie de l'énergie du laser, ce qui *in fine* inhibe la formation des centres métalliques colorés. Il est alors nécessaire de fournir une forte énergie au verre pour obtenir une coloration. Cela implique donc une dégradation du verre qui n'est pas acceptable dans un procédé industriel, et encore moins lorsque les flacons de verre ainsi produits sont destinés à des industries où le rendu esthétique est un critère particulièrement important.

En définitive, les procédés connus de décoration en masse d'objets en verre transparent semblent ne pas pouvoir conduire à décorer des objets, de type flacon de verre, de manière satisfaisante selon un procédé industriel.

On connaît par ailleurs du document DE-10 2008 007871 A1 un procédé comportant une étape d'irradiation d'un verre photo-structurable avec un laser afin d'altérer localement les propriétés réfractives du verre.

Les objets assignés à la présente invention visent en conséquence à remédier aux différents inconvénients énumérés précédemment et à proposer un nouveau procédé pour permettre la décoration d'un objet en verre transparent sans le détériorer, et un nouvel objet en verre transparent obtenu par ce procédé et décoré par la présence de motifs colorés dans la masse du verre.

Un autre objet de l'invention vise à proposer un nouveau procédé pour colorer un objet en verre transparent qui permet d'obtenir des cadences de fabrication élevées.

Un autre objet de l'invention vise à proposer un nouveau procédé pour permettre la décoration d'un objet en verre transparent et ayant une coloration localisée selon plusieurs nuances de couleurs.

Les objets assignés à l'invention sont atteints par un procédé de décoration industriel selon la revendication 1.

D'autres objets et avantages de l'invention apparaîtront mieux à la lecture de la description ci-après, ainsi qu'à l'aide des dessins annexés, donnés à titre purement illustratif et non limitatif :
- La figure 1 illustre selon une vue schématique le dispositif permettant la mise en oeuvre du procédé permettant de décorer des objets en verre transparent.
- La figure 2 représente une photographie de face d'un essai de décoration d'un objet en verre obtenu selon le procédé de l'invention.

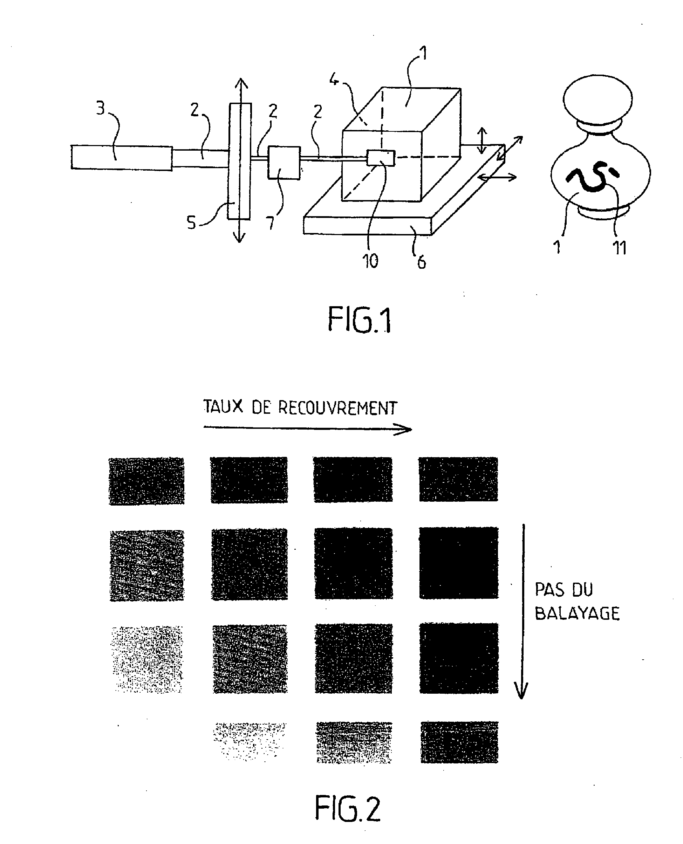

L'objet en verre 1 obtenu selon le procédé de l'invention et illustré de manière générale à la figure 1 est irradié par le faisceau 2 d'un laser 3 qui rencontre l'objet en verre 1 au niveau de la surface d'irradiation 4 créant ainsi une zone irradiée 10 au sein de l'objet en verre 1. Toute cette zone irradiée 10 ou seulement une partie constituera au final le motif coloré 11.

De façon particulièrement préférentielle, ledit objet en verre 1 sera constitué par un bloc ou un récipient, et notamment un flacon. Avantageusement cet objet en verre 1 est destiné au marché de la cosmétique ou de la parfumerie, pour lesquels la qualité esthétique d'un motif décoratif est particulièrement importante. Cet objet en verre 1 est représenté sur la figure 1 à titre purement illustratif et aucunement limitatif comme étant un parallélépipède en verre ou un flacon en verre destiné au marché de la cosmétique ou de la parfumerie.

La transparence de l'objet en verre 1 est assurée par l'utilisation, dans la composition du verre, de cérium et d'une teneur cumulée en étain et en antimoine inférieure à 100 ppm. Cette valeur seuil est la valeur à partir de laquelle la présence de ces éléments influe significativement sur la transparence du verre. Mais bien évidemment la présence de ces éléments n'empêche pas la coloration du verre au niveau des zones irradiées, bien au contraire.

Avantageusement les objets en verres 1 décorés ne comprennent ni d'étain ni d'antimoine pour s'assurer de la transparence du verre, c'est-à-dire que la composition en verre est dépourvue de ces deux éléments.

De cette manière l'objet en verre a des propriétés de transparence particulières, à savoir une très faible absorbance. Ces flacons peuvent dès lors être destinés par exemple au marché de la parfumerie, de la cosmétique ou de l'alimentaire, sans pour autant que cela soit limitatif quant aux marchés d'applications de tels objets en verre 1 ainsi décorés.

L'objet en verre 1 ainsi décoré comprend nécessairement dans sa composition au moins la présence d'un oxyde métallique d'argent, d'or ou de cuivre. La précipitation de cet oxyde métallique en nanoparticules métalliques sera responsable de la coloration locale de l'objet en verre 1 et notamment de la teinte de la coloration.

La coloration de l'objet peut se situer sur la surface de l'objet mais également en masse dans l'objet de verre 1. Cela signifie que la coloration peut être sous la surface d'irradiation 4 de l'objet en verre 1, localisée dans le volume ou l'épaisseur de l'objet en verre 1. Le marquage s'effectue dans la masse de l'objet en verre 1 et il est possible de le faire loin sous la surface.

D'un point de vue pratique, il faut marquer l'objet en verre 1 à une distance supérieure aux tolérances verrières afin d'être sûr de toujours être à l'intérieur de l'objet en verre 1.

Le motif coloré 11 de l'objet en verre 1 peut apparaître de manière nette. Le contraste de couleur entre le motif coloré 11 et le verre transparent peut être clairement et précisément défini, sans la présence d'une zone intermédiaire faiblement colorée. L'absence de thermoréducteurs aide particulièrement à obtenir ce bon contraste en ne permettant pas la réduction de l'ensemble des particules métalliques présentes dans le verre.

La polyvalence de la technique de décoration de cet objet en verre 1 autorise également à colorer le verre avec des teintes dont l'intensité de coloration est graduée. L'invention concerne un procédé de décoration industriel selon lequel on réalise des motifs colorés dans la masse d'un objet en verre transparent dont la composition comprend au moins un oxyde métallique d'argent, d'or ou de cuivre, ainsi que du cérium et une teneur cumulée en antimoine et en étain inférieure à 100 ppm, ledit procédé comportant les étapes successives suivantes:
- une étape d'irradiation laser de la zone à colorer dudit objet en verre,
- une étape finale de recuit du verre irradié,
et étant caractérisé en ce qu'il comprend, avant l'étape d'irradiation laser, une étape d'oxydation du verre (de préférence, on utilise une composition de verre oxydée grâce au passage du verre dans le canal d'acheminement reliant le four de fabrication à la ligne de production, ledit canal étant pourvu d'une atmosphère oxydante, notamment grâce à une présence accrue d'oxygène), et en ce que l'étape d'irradiation laser de la zone à colorer s'effectue par une irradiation laser de durée d'impulsion inférieure ou égale à 10⁻¹¹s tout en fournissant une puissance au verre supérieure à 10¹² W/cm², préférentiellement comprise entre 10¹² et 5.10¹⁴ W/cm².

Ainsi l'énergie fournie localement à l'objet en verre 1 est relativement modérée car elle n'endommage pas le verre en créant par exemple des microfractures ou une fragilité importante. La combinaison de l'utilisation de fortes puissances d'irradiation et une durée d'exposition très faible permet d'effectuer une coloration d'un verre particulièrement transparent comprenant du cérium ainsi qu'une faible quantité de thermoréducteurs. Ces valeurs de puissance d'irradiation sont donc le compromis idéal pour obtenir la puissance voulue au sein du verre pour correctement initier la réaction qui permet de colorer le verre.

Les travaux de recherche conduisant à l'invention ont ainsi montré qu'il fallait privilégier les puissances instantanées fortes aux puissances instantanées plus faibles à énergie surfacique déposée égale. Cela a permis de rendre cette technique viable pour des verres particulièrement transparents.

Par ailleurs, le procédé de décoration selon l'invention s'effectue avec un verre oxydé. En effet, l'atmosphère dans le canal d'acheminement du verre, c'est-à-dire le canal allant du four de fabrication à la ligne de production, est avantageusement oxydante, notamment grâce à une présence accrue d'oxygène. Ainsi, à l'issue de sa fabrication dans le four, l'objet en verre est transporté jusqu'à la zone dans laquelle il sera irradié par le laser via un canal d'acheminement dont l'atmosphère est particulièrement oxydante.

Par conséquent, le procédé de décoration selon l'invention comprend une étape d'oxydation du verre dans le canal d'acheminement du verre reliant le four de fabrication à la ligne de production, ledit canal d'acheminement du verre comportant une atmosphère dont la teneur en oxygène est accrue.

L'étape d'oxydation du verre dans le canal d'acheminement du verre est effectuée avant, ou en amont de l'étape d'irradiation laser de la surface à colorer.

La composition de verre est alors oxydée grâce au passage du verre dans ce canal d'acheminement pourvu d'une atmosphère oxydante. Cela permet d'éviter une réduction imprévue des oxydes métalliques présents dans la composition de verre, ce qui créerait une coloration du verre. La teneur en oxygène est de préférence supérieure à 1 % dans les fumées de combustion au contact du verre si les brûleurs des organes de fabrication fonctionnent au gaz Des techniques similaires pour rendre l'atmosphère oxydante sont connues de l'homme du métier pour des brûleurs de type différent.

Préférentiellement, l'irradiation est effectuée par des lasers 3 dont la longueur d'onde est comprise entre 250 et 1700 nm, préférentiellement entre 750 et 1200 nm. Ces longueurs d'onde sont adaptées au procédé car elles permettent de transmettre de l'énergie aux éléments réducteurs dans le verre et ainsi initier la coloration locale de l'objet en verre 1.

Avantageusement, l'irradiation est effectuée par des lasers 3 dont la durée d'impulsion est inférieure à 6 ps, préférentiellement comprise entre 500 fs et 2 ps.

Pour obtenir les irradiances visées par l'invention (sensiblement supérieures à 10¹²W/cm²), on peut effectuer l'étape d'irradiation à l'aide d'un laser 3 dont le faisceau 2 traverse un système de focalisation optique 5, comme cela est notamment représenté sur la figure 1. Cela permet ainsi d'augmenter la puissance surfacique fournie au verre pour optimiser le procédé de décoration.

Par ailleurs un tel système de focalisation peut permettre l'irradiation localisée du verre en focalisant le faisceau 2 en un point précis. Cela crée au sein de la zone irradiée 10 une zone particulière dans la masse du verre où l'irradiation est supérieure à une valeur seuil. Seule cette zone particulière constituera au final le motif coloré 11. En effet, le système de focalisation 5 peut notamment servir à irradier l'objet en verre 1, de telle façon que seule une zone précisément définie devienne le motif coloré 11 dans la masse du verre. On peut dès lors choisir la profondeur et la largeur de la coloration dans la masse de l'objet en verre 1 et notamment colorer le verre sous la surface irradiée 4.

Ce système de focalisation 4 peut comprendre différents systèmes optiques permettant de réduire la taille du faisceau 2 du laser 3 tout comme cela peut permettre d'agrandir ce faisceau 2. La réduction du faisceau 2 peut présenter en outre l'avantage d'augmenter la puissance surfacique du faisceau 2 du laser 3, ce qui est un paramètre clé de ce procédé de décoration.

Avantageusement, l'étape d'irradiation est combinée avec une étape de déplacement du faisceau 2 du laser 3 ou de l'objet à décorer 1 selon une vitesse de marquage pour réaliser un motif coloré 11 de manière contrôlée sur de grandes distances.

De manière plus avantageuse, le laser 3 ainsi que l'objet en verre 1 est fixe tandis que le faisceau 2 du laser 3 est déplacé à l'aide d'un scanner optique 7 qui permet de précisément irradier une zone localisée dans le verre, comme cela est représenté sur la figure 1. Un tel système permet de très rapidement déplacer le faisceau 2 et ainsi décorer un objet en verre 1 selon une vitesse de marquage importante.

Par ailleurs, pour certaines décorations, on peut conjointement, ou non, à l'utilisation du scanner optique 7, déplacer l'objet en verre 1 à l'aide d'un système de mobilité 6. Ce système est réalisé avec des technologies classiques qui permettent de réguler de faibles déplacements de manière rapide et contrôlée. Il est schématiquement représenté sur la figure 1. De tels systèmes de mobilité 6 ainsi que le scanner optique 7 sont préférentiellement contrôlés électroniquement et/ou informatiquement. La décoration d'objets en verre 1 avec un motif coloré 11 complexe est ainsi facilitée. Ce motif coloré 11 peut être continu en ne formant qu'un unique ensemble ou discontinu.

La vitesse de marquage correspond au temps nécessaire pour décorer une surface donnée. Cette vitesse peut dépendre de manière non exhaustive de divers paramètres comme la puissance du laser 3, l'intensité de coloration voulue pour la décoration ou de la vitesse de déplacement du système de mobilité 6. Elle peut être ou non constante. Cela est notamment fonction du motif coloré 11 avec lequel on souhaite orner l'objet en verre 1.

Selon le procédé de l'invention, la vitesse de marquage est au moins supérieure à 1 mm²/s, de préférence supérieure à 4 mm²/s. Ce procédé est alors parfaitement approprié pour une application industrielle.

Le procédé de décoration précédemment décrit satisfait donc toutes les contraintes d'un procédé industriel : il est notamment répétable, rapide et de coût modéré.

Après cette étape d'irradiation, il peut apparaître un changement de teinte du verre dans la zone irradiée 10. Cette première teinte provient de l'ionisation du verre par l'irradiation laser mais n'est pas stable dans le temps. Elle ne correspond pas non plus à la couleur finale de la décoration. Pour que la coloration soit définitive, il est en effet alors nécessaire d'avoir recours à une étape finale de recuit qui permet de révéler les couleurs du motif décoratif 11. Cette étape finale de recuit consiste à placer l'objet en verre 1 irradié dans une enceinte dont la température est de préférence comprise entre 300 et 700 °C pendant une durée supérieure à 10 minutes.

A l'issue de cette étape finale de recuit, l'objet en verre 1 est coloré à l'intérieur de la zone irradiée 10, laquelle peut être plus grande que la zone pourvue du motif décoratif 11. Le motif décoratif 11 ainsi produit peut apparaître sous la surface irradiée 4, à une distance positive ou nulle.

La teinte de la coloration du verre dépend de l'oxyde métallique présent dans la composition du verre mais également du couple comprenant la puissance d'irradiation et la durée d'irradiation. Préférentiellement la coloration du matériau se fera non pas grâce à une unique impulsion laser mais grâce à plusieurs impulsions. En effet, selon le procédé de l'invention, on fait varier le taux de recouvrement du laser lors de l'étape d'irradiation pour modifier l'intensité de la coloration du motif coloré 11 sur l'objet en verre 1 à décorer. Le taux de recouvrement est le pourcentage de la surface d'irradiation 4 traitée par une première impulsion du laser 3 qui est retraité par l'impulsion suivante

De manière préférentielle, on augmente le taux de recouvrement du laser 3 lors de l'étape d'irradiation pour augmenter l'intensité de la coloration du motif 11 sur l'objet en verre 1 à décorer. Modifier la coloration en ajustant simplement ce taux de recouvrement permet au laser 3 d'effectuer des pulsations d'irradiation de durée toujours constante, ce qui constitue un optimum de fonctionnement pour un laser

Mais on peut également modifier l'intensité de coloration en modifiant l'intensité du laser. Pour une durée constante d'irradiation sur un objet en verre 1, l'intensité de coloration augmente avec l'intensité du laser et donc l'énergie totale déposée sur l'objet en verre 1.

De plus, l'absence, ou la très faible teneur, d'antimoine et d'étain permet également de faire apparaître de manière nette le motif décoratif 11 sur le verre car aucun élément autre que l'oxyde métallique irradié par le laser n'a changé de couleur durant l'irradiation. Cela permet d'obtenir une décoration de qualité, ce qui constitue un critère particulièrement important pour des applications où le rendu esthétique est primordial.

### REALISATION PREFERENTIELLE DE L'INVENTION

A titre illustratif et non limitatif, une réalisation de l'invention est décrite ci-après. Il s'agit de la décoration d'un objet en verre 1 dont la composition comprend notamment de l'oxyde d'argent ainsi que d'autres éléments et qui est résumée sur le tableau 1 suivant :

**Tableau 1 : composition du verre**

| élément | SiO2 | Na2O | KZO | CaO | MgO | Al2O3 | Fe2O3 | CeO | Li2O | SO3 | Ag2O |
|---|---|---|---|---|---|---|---|---|---|---|---|
| % | 72,65 | 13,66 | 80 ppm | 10,51 | 570 ppm | 2,20 | 119 ppm | 120 ppm | 0,51 | 0,32 | 300 ppm |

Il s'agit d'une composition de verre transparent destiné à la parfumerie avec un ajout d'oxyde d'argent.

Le faisceau 2 du laser 3 utilisé pour ces essais illumine l'objet en verre 1 avec des impulsions de 500 fs à une longueur d'onde de 1030 nm. Le faisceau 2 a un diamètre de 3,5 mm en sortie du laser 3. Il s'agit d'un laser de laboratoire de faible puissance. Il est focalisé grâce à un système de focalisation 5 de manière à obtenir un diamètre de 26 microns en sortie. La fréquence d'irradiation est égale à 20 kHz.

Différents carrés de 2 mm de côté sur l'objet en verre 1 sont irradiés avec ce laser. Le verre devient grisé après avoir été irradié par le faisceau 2 du laser 3. Après une étape finale de recuit du verre à 450°C pendant 30 minutes, le verre se colore au niveau des différentes zones irradiées 10. Différents essais, pour lesquels on a modifié le taux de recouvrement ainsi que le pas du déplacement du laser 3, ont permis de réaliser différentes nuances de couleurs. Cela peut se voir sur la figure 2 qui représente ces essais selon l'ordre suivant :
- De gauche à droite : le taux de recouvrement varie entre 30 et 90 % par pas de 20%.
- De haut en bas : le pas du balayage est modifié entre 5 et 35 microns par pas de 10 microns.

La durée d'irradiation est donc différente sur chaque carré testé.

Ainsi, plus l'énergie déposée est importante (taux de recouvrement élevé), plus le jaunissement est fort, comme cela se voit sur la figure 2.

La modification du pas du balayage ainsi que du taux de recouvrement implique également des vitesses des temps d'usinage nécessaire pour ces motifs de 4 mm², comme cela est représenté sur le tableau 2 suivant (les valeurs indiquées sont en secondes):

**Tableau 2 : Temps d'usinage en fonction des différents paramètres**

| **Pas du balayage** | **Taux de recouvrement longitudinal (%) équivalent à la vitesse de balayage (mm/s)** | | | |
|---|---|---|---|---|
| | **30 % 300 mm.s⁻¹** | **50% 210 mm.s⁻¹** | **70% 120 mm.s⁻¹¹** | **90% 40 mm.s⁻¹** |
| **5 µm** | 6 | 8,3 | 14 | 40,6 |
| **15 µm** | 2 | 2,8 | 4,7 | 13,5 |
| **25 µm** | 1,2 | 1,7 | 2,8 | 8,1 |
| **35 µm** | 0,9 | 1,2 | 2 | 5,8 |

Ces temps d'usinage correspondent à des essais effectués avec le laser de laboratoire décrit dans cet exemple. Il existe par ailleurs des lasers plus puissants permettant de réduire sensiblement ce temps d'usinage et donc d'augmenter la vitesse de marquage. En effet, avec des lasers ayant comme caractéristique des impulsions dont l'énergie est égale à 40 µJ, comme le laser Tangerine d'Amplitude Systemes®, il est possible de multiplier cette vitesse de marquage par un facteur 6. Cette vitesse de marquage peut même être augmentée par un facteur 20 dans le cas d'un laser ayant comme caractéristique des impulsions dont l'énergie est égale à 100 µJ.

Par ailleurs il a été également mesuré sur ce verre que le seuil de déclenchement de la coloration se situe à une puissance de l'ordre de 10¹²W/cm².

En définitive, l'invention permet de colorer des objets en verre 1 particulièrement transparents par une technique d'irradiation laser qui ne pouvait pas auparavant être réalisée sur ce type de verre.

Le procédé de décoration selon l'invention permet de ne pas endommager l'objet en verre tout en permettant une décoration rapide grâce à une irradiation de très courte durée mais de grande puissance surfacique. Cette vitesse de marquage rapide permet dès lors de rendre le procédé peu coûteux et particulièrement adapté dans un processus industriel.

## Revendications

1. Procédé de décoration industriel selon lequel on réalise un motif coloré (11) dans la masse d'un objet en verre (1) transparent dont la composition comprend au moins un oxyde métallique d'argent, d'or ou de cuivre, ainsi que du cérium et une teneur cumulée en antimoine et en étain inférieure à 100 ppm, ledit procédé comportant les étapes successives suivantes:
- une étape d'irradiation laser de la zone à colorer dudit objet en verre (1),
- une étape finale de recuit du verre irradié,
et étant **caractérisé en ce qu'**il comprend, avant ladite étape d'irradiation laser, une étape d'oxydation du verre, l'étape d'irradiation laser de la zone à colorer s'effectuant par une irradiation laser de durée d'impulsion inférieure ou égaie à 10⁻¹¹s tout en fournissant une puissance au verre supérieure à 10¹²W/cm², préférentiellement comprise entre 10¹² et 5.10¹⁴ W/cm².

2. Procédé selon la revendication 1 **caractérisé en ce que** ledit objet en verre (1) a été fabriqué dans un four de fabrication et **en ce qu'**à l'issue de sa fabrication dans ledit four, l'objet en verre (1) est transporté jusqu'à la zone dans laquelle il sera irradié par le laser via un canal d'acheminement ladite étape d'oxydation du verre s'effectuant grâce au passage du verre dans ledit canal d'acheminement, lequel est pourvu d'une atmosphère oxydante, notamment grâce à une présence accrue d'oxygène.

3. Procédé selon la revendication 1 ou 2 **caractérisé en ce qu'**on utilise une composition ne comprenant ni de l'antimoine ni de l'étain.

4. Procédé selon l'une des revendications précédentes **caractérisé en ce que** l'étape d'irradiation s'effectue à l'aide d'un laser (3) dont la longueur d'onde est comprise entre 250 et 1700 nm, préférentiellement entre 750 et 1200 nm.

5. Procédé selon l'une des revendications précédentes **caractérisé en ce que** l'étape d'irradiation s'effectue à l'aide d'un laser (3) dont la durée d'impulsion est inférieure à 6 ps, préférentiellement comprise entre 500 fs et 2 ps.

6. Procédé selon l'une des revendications précédentes **caractérisé en ce que** l'étape d'irradiation s'effectue à l'aide d'un laser (3) dont le faisceau (2) traverse un système de focalisation optique (5).

7. Procédé selon l'une des revendications précédentes **caractérisé en ce que** l'on fait varier le taux de recouvrement du laser lors de l'étape d'irradiation pour modifier l'intensité de la coloration du motif coloré (11) sur l'objet en verre (1) à décorer.

8. Procédé selon l'une des revendications précédentes **caractérisé en ce que** l'on augmente le taux de recouvrement du laser lors de l'étape d'irradiation pour augmenter l'intensité de la coloration du motif coloré (11) sur l'objet en verre (1) à décorer.

9. Procédé selon l'une des revendications précédentes **caractérisé en ce que** l'étape d'irradiation est combinée avec une étape de déplacement du faisceau (2) du laser (3) ou de l'objet en verre (1) à décorer selon une vitesse de marquage pour réaliser un motif coloré (11) de manière contrôlée sur de grandes distances.

10. Procédé selon la revendication 9 **caractérisé en ce que** la vitesse de marquage est au moins supérieure à 1 mm²/s, de préférence supérieure à 4 mm²/s.

11. Procédé selon l'une des revendications précédentes **caractérisé en ce que** l'étape finale de recuit consiste à placer l'objet en verre (1) irradié dans une enceinte dont la température est de préférence comprise entre 300 et 700 °C pendant une durée supérieure à 10 minutes.

12. Procédé selon l'une des revendications 1 à 11 **caractérisé en ce que** ledit objet en verre (1) constitue un flacon destiné à la parfumerie, à la cosmétique ou à l'alimentaire.

## Patentansprüche

1. Industrielles Verzierungsverfahren, bei dem ein farbiges Muster (11) in der Masse eines durchsichtigen Glasobjekts (1) erzeugt wird, dessen Zusammensetzung mindestens ein Silber-, Gold- oder Kupfermetalloxid sowie Cer und einen Summengehalt an Antimon und Zinn von weniger als 100 ppm umfasst, wobei das Verfahren die folgenden aufeinanderfolgenden Schritte umfasst:
- einen Schritt der Laserbestrahlung der zu färbenden Zone des Glasobjekts (1),
- einen Endschritt des Einbrennens des bestrahlten Glases,
**dadurch gekennzeichnet, dass** es vor dem Schritt der Laserbestrahlung einen Schritt der Oxidation des Glases umfasst, wobei der Schritt der Laserbestrahlung der zu färbenden Zone durch eine Laserbestrahlung mit einer Impulsdauer erfolgt, die kleiner oder gleich 10⁻¹¹ s ist und dabei dem Glas eine Leistung von mehr als 10¹² W/cm², bevorzugt zwischen 10¹² und 5.10¹⁴ W/cm² zuführt.

2. Verfahren nach Anspruch 1, **dadurch gekennzeichnet, dass** das Glasobjekt (1) in einem Fertigungsofen produziert wurde und dass das Glasobjekt (1) am Ende seiner Fertigung in dem Ofen bis zu der Zone, in der es von dem Laser bestrahlt wird, über einen Beförderungskanal transportiert wird, wobei der Schritt der Oxidation des Glases dank des Ganges des Glases durch den Beförderungskanal erfolgt, der mit einer oxidierenden Atmosphäre versehen ist, insbesondere dank einer vermehrten Präsenz von Sauerstoff.

3. Verfahren nach Anspruch 1 oder 2, **dadurch gekennzeichnet, dass** eine Zusammensetzung verwendet wird, die weder Antimon noch Zinn umfasst.

4. Verfahren nach einem der vorhergehenden Ansprüche, **dadurch gekennzeichnet, dass** der Schritt der Bestrahlung mit Hilfe eines Lasers (3) erfolgt, dessen Wellenlänge zwischen 250 und 1700 nm, bevorzugt zwischen 750 und 1200 nm liegt.

5. Verfahren nach einem der vorhergehenden Ansprüche, **dadurch gekennzeichnet, dass** der Schritt der Bestrahlung mit Hilfe eines Lasers (3) erfolgt, dessen Impulsdauer kleiner als 6 ps ist und bevorzugt zwischen 500 fs und 2 ps liegt.

6. Verfahren nach einem der vorhergehenden Ansprüche, **dadurch gekennzeichnet, dass** der Schritt der Bestrahlung mit Hilfe eines Lasers (3) erfolgt, dessen Strahl (2) durch ein optisches Fokussiersystem (5) läuft.

7. Verfahren nach einem der vorhergehenden Ansprüche, **dadurch gekennzeichnet, dass** der Abdeckungsgrad des Lasers bei dem Bestrahlungsschritt variiert wird, um die Stärke der Färbung des farbigen Musters (11) auf dem zu verzierenden Glasobjekt (1) zu ändern.

8. Verfahren nach einem der vorhergehenden Ansprüche, **dadurch gekennzeichnet, dass** der Abdeckungsgrad des Lasers bei dem Bestrahlungsschritt erhöht wird, um die Stärke der Färbung des farbigen Musters (11) auf dem zu verzierenden Glasobjekt (1) zu erhöhen.

9. Verfahren nach einem der vorhergehenden Ansprüche, **dadurch gekennzeichnet, dass** der Bestrahlungsschritt mit einem Schritt des Verschiebens des Strahls (2) des Lasers (3) oder des zu verzierenden Glasobjekts (1) gemäß einer Markierungsgeschwindigkeit kombiniert ist, um auf kontrollierte Art und Weise ein farbiges Muster (11) über lange Strecken zu erzeugen.

10. Verfahren nach Anspruch 9, **dadurch gekennzeichnet, dass** die Markierungsgeschwindigkeit mindestens größer als 1 mm²/s, bevorzugt größer als 4 mm²/s ist.

11. Verfahren nach einem der vorhergehenden Ansprüche, **dadurch gekennzeichnet, dass** der Endschritt des Einbrennens darin besteht, das bestrahlte Glasobjekt (1) in eine Einfassung, deren Temperatur bevorzugt zwischen 300 und 700 °C liegt, für eine Dauer von mehr als 10 Minuten zu legen.

12. Verfahren nach einem der Ansprüche 1 bis 11, **dadurch gekennzeichnet, dass** das Glasobjekt (1) ein Fläschchen ist, das für die Parfümerie, die Kosmetik oder den Lebensmittelbereich bestimmt ist.

## Claims

1. An industrial decoration method in which a colored pattern (11) is made in the bulk of an article (1) made of transparent glass of composition including at least one metallic oxide of silver, of gold, or of copper, as well as cerium and a total content of antimony plus tin that is less than 100 ppm, said method including the following successive steps:
- a step of laser irradiating the zone of said glass article (1) that is to be colored;
- a final step of annealing the irradiated glass;
and being **characterized in that** it comprises, before said step of laser irradiating, a step of oxidizing the glass, the step of laser irradiating the zone that is to be colored being performed with laser irradiation having a pulse duration that is less than or equal to 10⁻¹¹ s, while delivering power to the glass at greater than 10¹² W/cm², and more preferably lying in the range 10¹² W/cm² to 5□10¹⁴ W/cm².

2. A method according to claim 1, **characterized in that** said glass article (1) has been fabricated in a furnace, and **in that** after having been fabricated in said furnace said glass article (1) is transported to the area where it will be laser irradiated via a delivery channel, said step of oxidizing the glass being performed as a result of the glass passing in the delivery channel which has an oxidizing atmosphere, in particular because of an increased presence of oxygen.

3. A method according to claim 1 or 2, **characterized in that** a composition is used that contains neither antimony nor tin.

4. A method according to any preceding claim, **characterized in that** the irradiation step is performed with the help of a laser (3) having a wavelength lying in the range 250 nm to 1700 nm, preferably lying in the range 750 nm to 1200 nm.

5. A method according to any preceding claim, **characterized in that** the irradiation step is performed with the help of a laser (3) having a pulse duration that is shorter than 6 ps, and that preferably lies in the range 500 fs to 2 ps.

6. A method according to any preceding claim, **characterized in that** the irradiation step is performed with the help of a laser (3) from which the beam (2) passes through an optical focusing system (5).

7. A method according to any preceding claim, **characterized in that** the overlap ratio of the laser is caused to vary during the irradiation step in order to modify the strength of the coloring of the colored pattern (11) on the glass article (1) to be decorated.

8. A method according to any preceding claim, **characterized in that** the overlap ratio of the laser is increased during the irradiation step in order to increase the strength of the coloring of the colored pattern (11) on the glass article (1) that is to be decorated.

9. A method according to any preceding claim, **characterized in that** the irradiation step is combined with a step of moving the beam (2) from the laser (3) or of moving the glass article (1) that is to be decorated at a marking speed in order to make a colored pattern (11) in controlled manner over long distances.

10. A method according to claim 9, **characterized in that** the marking speed is at least greater than 1 mm²/s, and preferably greater than 4 mm²/s.

11. A method according to any preceding claim, **characterized in that** the final annealing step consists in placing the irradiated glass article (1) in an enclosure at a temperature that preferably lies in the range 300°C to 700°C for a duration that is longer than 10 min.

12. A method according to any one of claims 1 to 11 **characterized in that** said glass article (1) constitutes a bottle for perfumery, cosmetics, or food.
